# DEMANDE DE BREVET EUROPEEN

(11) **EP 0 899 433 A1**
(43) Date de publication de la demande: **03.03.1999**
(21) Numéro de dépôt: 98402004.0
(22) Date de dépôt: 06.08.1998
(51) Int. Cl.: F02B 23/10, F02F 1/42

(54) **Moteur à injection directe et allumage commandé**

(30) Priorité: 28.08.1997 FR 9710740
(71) Demandeur: RENAULT, 92109 Boulogne-Billancourt (FR)
(72) Inventeur: Anrigo, Philippe, 77760 Achere la Foret (FR)
(74) Mandataire: Fernandez, Francis Lionel

(57) **Abrégé**

Le moteur à combustion interne à injection directe et allumage commandé comprend au-dessus de chaque cylindre-moteur (2) un élément de culasse (1) comportant deux orifices d'admission et au moins un orifice d'échappement ainsi que des conduits correspondants d'admission (10) et d'échappement (6) débouchant tous sur une même face latérale (FL1) de la culasse.

## Description

L'invention concerne les moteurs à combustion interne à injection directe et allumage commandé.

Par opposition aux moteurs à injection indirecte dans lesquels les injecteurs de carburant sont situés en amont de la chambre de combustion et débouchent dans les conduits d'admission, les moteurs à injection directe comportent des injecteurs débouchant directement dans les chambres de combustion des cylindres-moteur.

L'invention propose un moteur à combustion interne à injection directe et allumage commandé pouvant notamment fonctionner en richesse variable en mélange homogène ou stratifié (carburant sous forme liquide; environ 60° avant le point mort haut).

Selon les caractéristiques générales de l'invention, ce moteur comprend, au-dessus de chaque cylindre-moteur, un élément de culasse comportant deux orifices d'admission et au moins un orifice d'échappement ainsi que des conduits correspondants d'admission et d'échappement débouchant tous sur une même face latérale de la culasse.

Selon un mode de réalisation de l'invention, le conduit d'échappement s'étend entre les deux conduits d'admission et, le conduit d'échappement d'une part, et les deux conduits d'admission d'autre part, s'étendent sur un même niveau au-dessus de la face inférieure de l'élément de culasse ou bien sur deux niveaux différents au-dessus de ladite face inférieure. En d'autres termes, les conduits d'admission et d'échappement peuvent être placés l'un au-dessous de l'autre ou dans un même plan horizontal.

En variante, l'élément de culasse comporte deux orifices d'échappement, et les deux conduits d'échappement d'une part et les deux conduits d'admission d'autre part s'étendent alors sur deux niveaux différents au-dessus de la face inférieure de l'élément de culasse. En d'autres termes, dans cette variante à deux soupapes d'échappement, les conduits d'admission et d'échappement sont placés l'un en dessous de l'autre.

La partie de la face inférieure de l'élément de culasse comportant les orifices d'admission peut être sensiblement plate, l'axe de chaque soupape d'admission étant alors sensiblement parallèle à l'axe du cylindre-moteur.

La partie de la face inférieure de l'élément de culasse comportant le ou les orifices d'échappement peut comporter un plan incliné.

La face supérieure du piston coulissant dans le cylindre-moteur comporte avantageusement une cavité en forme de bol située sous les orifices d'admission, et éventuellement un plan incliné complémentaire de celui de la face inférieure de l'élément de culasse ce qui permet notamment d'obtenir un taux de compression compris entre 10 et 12.

En variante, la face inférieure de l'élément de culasse peut être totalement plate.

Selon un mode de réalisation de l'invention, le moteur comporte, pour chaque cylindre-moteur, une bougie approximativement centrée et sensiblement parallèle à l'axe du cylindre-moteur et située entre les orifices d'admission et d'échappement, ainsi qu'un injecteur incliné implanté du côté des orifices d'admission. Cet injecteur incliné peut être éventuellement agencé de façon à ce que le jet de carburant injecté soit décalé par rapport à l'axe du corps de l'injecteur. En d'autres termes, l'injecteur peut être à tir dit "décalé" par rapport à l'axe du corps de l'injecteur, et ce pour optimiser la zone d'impact du jet de carburant sur la surface du piston.

Les conduits d'admission peuvent être agencés de façon à générer dans la chambre de combustion des mouvements aérodynamiques de rouleaux d'axes perpendiculaires à l'axe du cylindre-moteur (mouvements de "tumble" en langue anglaise).

Les conduits d'admission peuvent être également agencés de façon à générer dans la chambre de combustion des mouvements aérodynamiques tourbillonnaires d'axes parallèles à l'axe du cylindre-moteur (mouvements de "swirl" en langue anglaise). Des mouvements aérodynamiques tourbillonnaires du type "swirl" et contra-rotatifs sont alors possibles et sont avantageusement associés à une forme spécifique de la surface supérieure du piston permettant le transport du carburant vers la bougie. A cet égard, la cavité réalisée dans le piston est agencée de façon à exploiter principalement la composante dite "swirl" ou la composante dite "tumble" de la masse d'air admise.

D'autres avantages et caractéristiques de l'invention apparaîtront à l'examen de la description détaillée d'un mode de réalisation, nullement limitatif, et des dessins annexés sur lesquels :
- la figure 1 est une vue très schématique de côté d'un élément de culasse et d'un piston d'un moteur selon l'invention, et
- la figure 2 représente très schématiquement et vue de dessus, la trace des orifices d'admission et d'échappement ainsi que la trace de la bougie et de l'injecteur sur la surface supérieure du piston de la figure 1.

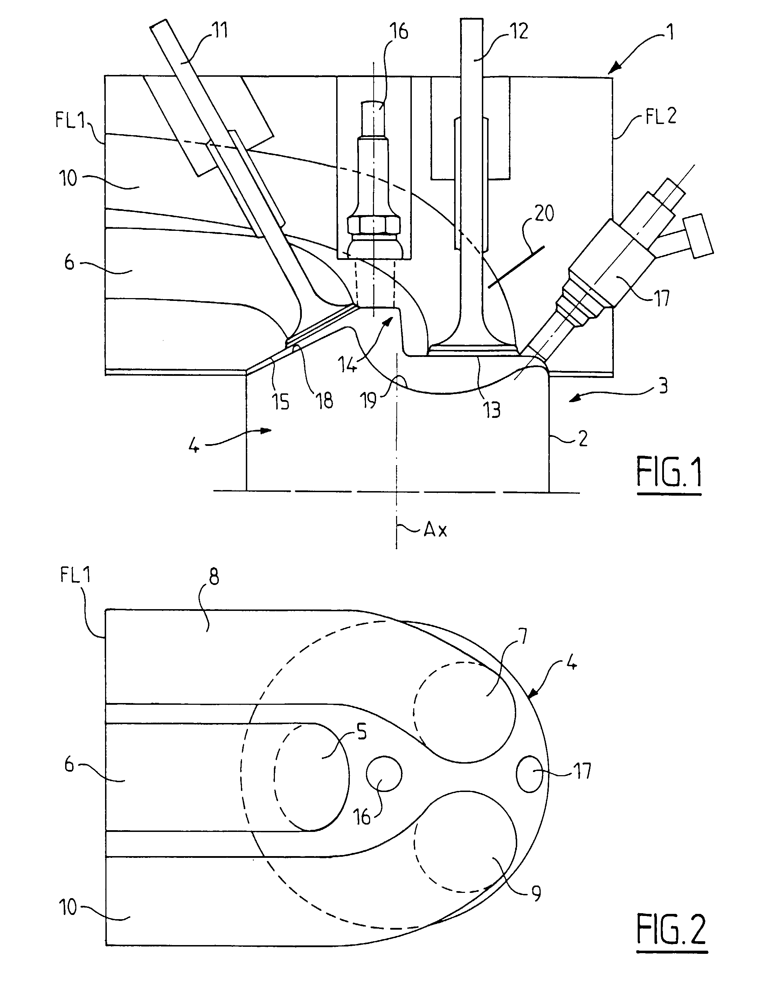

Sur les figures, la référence 1 désigne un élément de culasse d'une culasse d'un moteur à injection directe et allumage commandé, disposé au-dessus du bloc moteur 3 dont l'axe longitudinal est perpendiculaire au plan de la figure 1.

Cet élément de culasse 1 est plus particulièrement disposé au-dessus d'un cylindre-moteur 2 d'axe Ax, et à l'intérieur duquel coulisse un piston 4.

La face inférieure de l'élément de culasse 1 comporte une partie plate 13 comportant deux orifices d'admission 7 et 9. Cette partie plate est prolongée par un dôme 14 dont la face supérieure comporte un orifice recevant une bougie 16 globalement centrée par rapport à l'axe Ax du cylindre-moteur (en pratique, l'axe de la bougie 16 et l'axe Ax du cylindre-moteur peuvent être séparés de quelques millimètres).

Le dôme 14 se prolonge par un plan incliné 15 comportant un orifice d'échappement 5 coopérant avec une soupape d'échappement 11.

Cette soupape d'échappement 11 commande l'ouverture et la fermeture d'un conduit d'échappement 6 qui débouche sur une face latérale FL1 de l'élément de culasse. De même, deux soupapes d'admission 12, coopérant avec les orifices d'admission 7 et 9, et d'axes sensiblement parallèles à l'axe Ax du cylindre-moteur, commandent l'ouverture et la fermeture de deux conduits d'admission 8 et 10 débouchant également sur la même face latérale FL1 de l'élément de culasse.

Dans cette variante de réalisation, le conduit d'échappement 6 s'étend entre les deux conduits d'admission 8 et 10, à un niveau de hauteur (par rapport à la face inférieure de l'élément de culasse), différent du niveau de hauteur auquel s'étendent les deux conduits d'admission.

Les conduits d'admission peuvent être agencés de façon à générer dans la chambre de combustion, délimitée notamment par la face supérieure du piston et par la face inférieure de l'élément de culasse, des mouvements aérodynamiques de type "tumble". A cet égard, un déflecteur 20, à position variable, peut être implanté dans les conduits d'admission pour augmenter le niveau de mouvements tourbillonnaires du type "tumble".

Les conduits d'admission peuvent être aussi agencés pour générer un mouvement de type "swirl" dans la chambre de combustion. On peut par exemple obturer l'un des conduits d'admission.

Alors que la bougie 16 est globalement centrée par rapport à l'axe Ax du cylindre-moteur et située entre les orifices d'admission et d'échappement, un injecteur incliné 17 est implanté du côté des orifices d'admission 7 et 9.

La face supérieure du piston comporte une cavité 19 en forme de bol, agencée pour exploiter principalement la composante "swirl" ou la composante "tumble" de la masse d'air admise. Cette cavité 19 est située sous les soupapes d'admission et s'étend également jusque sous la bougie 16.

Cette cavité 19 se prolonge par un plan incliné 18 complémentaire du plan incliné 15 de la face inférieure de l'élément de culasse. Ceci permet notamment d'obtenir un taux de compression de 10 à 12 dans la chambre de combustion.

L'injecteur 17 peut être éventuellement à tir dit "décalé" par rapport à l'axe du corps de l'injecteur, de façon à optimiser la zone d'impact du jet de carburant (ici d'essence) sur la surface supérieure du piston.

## Revendications

1. Moteur à combustion interne à injection directe et allumage commandé, caractérisé par le fait qu'il comprend au dessus de chaque cylindre-moteur (2) un élément de culasse (1) comportant deux orifices d'admission (7,9) et au moins un orifice d'échappement (5) ainsi que des conduits correspondants d'admission (8,10) et d'échappement (6) débouchant tous sur une même face latérale (FL1) de la culasse.

2. Moteur selon la revendication 1, caractérisé par le fait que le conduit d'échappement (6) s'étend entre les deux conduits d'admission (8,10) et par le fait que le conduit d'échappement (6) d'une part et les deux conduits d'admission (8,10) d'autre part s'étendent sur un même niveau au dessus de la face inférieure de l'élément de culasse ou sur deux niveaux différents au dessus de ladite face inférieure.

3. Moteur selon la revendication 1, caractérisé par le fait que l'élément de culasse (1) comporte deux orifices d'échappement, et par le fait que les deux conduits d'échappement d'une part et les deux conduits d'admission d'autre part s'étendent sur deux niveaux différents au dessus de la face inférieure de l'élément de culasse.

4. Moteur selon l'une des revendications précédentes, caractérisé par le fait que la partie (13) de la face inférieure de l'élément de culasse comportant les orifices d'admission est sensiblement plate, l'axe de chaque soupape d'admission (12) étant sensiblement parallèle à l'axe (Ax) du cylindre-moteur.

5. Moteur selon la revendication 2, 3 ou 4, caractérisé par le fait que la partie (15) de la face inférieure de l'élément de culasse comportant le ou les orifices d'échappement (5) comporte un plan incliné.

6. Moteur selon la revendication 5, caractérisé par le fait que la face supérieure du piston (4) coulissant dans le cylindre-moteur comporte un plan incliné (18) complémentaire de celui (15) de la face inférieure de l'élément de culasse et une cavité (19) en forme de bol située sous les orifices d'admission.

7. Moteur selon l'une des revendications 1 à 4, caractérisé par le fait que la face inférieure de l'élément de culasse (1) est totalement plate.

8. Moteur selon l'une des revendications précédentes, caractérisé par le fait qu'il comporte, pour chaque cylindre-moteur, une bougie (16) approximativement centrée par rapport à l'axe du cylindre-moteur et située entre les orifices d'admission et d'échappement, et un injecteur incliné (17) implanté du côté des orifices d'admission et éventuellement agencé de façon à ce que le jet de carburant injecté soit décalé par rapport à l'axe du corps de l'injecteur.

9. Moteur selon l'une des revendications précédentes, caractérisé par le fait que les conduits d'admission (8,9) sont agencés de façon à générer dans la chambre de combustion des mouvements aérodynamiques de rouleau d'axes perpendiculaires à l'axe du cylindre-moteur.

10. Moteur selon l'une des revendications précédentes, caractérisé par le fait que les conduits d'admission (8,9) sont agencés de façon à générer dans la chambre de combustion des mouvements aerodynamiques tourbillonnaires, éventuellement contra-rotatif, d'axes parallèles à l'axe du cylindre-moteur.
